Europäisches Patentamt

European Patent Office

Office européen des brevets

(19)

(11) Numéro de publication : **0 023 463**
**B1**

(12) # FASCICULE DE BREVET EUROPÉEN

(45) Date de publication du fascicule du brevet :
16.02.83

(51) Int. Cl.³ : **G 02 B   7/26**

(21) Numéro de dépôt : 80401129.4

(22) Date de dépôt : 30.07.80

(54) **Dispositif pour régler le niveau de la puissance lumineuse émise à l'extrémité d'une fibre optique.**

(30) Priorité : 30.07.79 FR 7919547

(43) Date de publication de la demande :
04.02.81 Bulletin 81/05

(45) Mention de la délivrance du brevet :
16.02.83 Bulletin 83/07

(84) Etats contractants désignés :
DE GB IT

(56) Documents cités :
FR A 2 245 001
US A 4 145 110

(73) Titulaire : **RADIALL Société anonyme dite:**
**101, rue Philibert Hoffmann**
**F-93116 Rosny sous Bois (FR)**

(72) Inventeur : **Despouys, Jean Bernard**
**4, rue Frédéric Mistral**
**F-75015 Paris (FR)**

(74) Mandataire : **Nony, Michel**
**Cabinet Nony 29, rue Cambacérès**
**F-75008 Paris (FR)**

EP 0 023 463 B1

Jouve, 18, rue St-Denis, 75001 Paris, France

Dispositif pour régler le niveau de la puissance lumineuse émise à l'extrémité d'une fibre optique

La présente invention concerne un dispositif pour régler le niveau de la puissance lumineuse émise à l'extrémité d'une fibre optique.

On connaît des dispositifs dans lesquels une pluralité de fibres optiques en faisceau sont alimentées par une source unique. Dans certaines applications il est nécessaire que le niveau de la puissance lumineuse émise à l'extrémité de chacune de ces fibres soit identique. Or, on a constaté que ce niveau de sortie peut varier dans des proportions importantes pouvant aller jusqu'à 25 %. Parmi les causes de cette variation on peut citer l'affaiblissement variable d'une fibre à l'autre, la qualité de la face optique à l'injection et à l'émission et les contraintes mécaniques ou climatiques appliquées à la fibre sur le trajet.

La présente invention vise à fournir un dispositif permettant de régler le niveau de la puissance lumineuse émise à l'extrémité d'une fibre individuelle afin que ce niveau soit uniforme pour toutes les fibres du faisceau.

A cet effet, l'invention prévoit un dispositif pour régler le niveau de la puissance lumineuse émise à l'extrémité d'une fibre optique, caractérisé par le fait qu'il comporte un manchon ouvert à ses deux extrémités, un support susceptible de se déplacer axialement à l'intérieur du manchon pour positionner l'extrémité de la fibre optique à l'intérieur du manchon à une distance donnée d'une des extrémités du manchon, des moyens pour bloquer ledit déplacement, et des moyens pour empêcher les rayons lumineux issus de l'extrémité de la fibre optique et frappant la paroi interne du manchon, de se réfléchir à l'extérieur du manchon.

Il est ainsi possible en réglant la distance de l'extrémité de la fibre optique à l'extrémité de sortie du manchon de faire varier l'angle d'ouverture du faisceau lumineux émis à la sortie du manchon, et par conséquent la puissance émise. Les moyens pour empêcher les rayons lumineux, issus de l'extrémité de la fibre optique et frappant la paroi interne du manchon, de se réfléchir à l'extérieur du manchon, assurent que ces rayons sont effectivement éliminés à la sortie du dispositif. Le dispositif selon l'invention constitue par conséquent un atténuateur réglable.

Dans une forme de réalisation la surface intérieure du manchon est absorbante.

Cependant la surface intérieure du manchon est de préférence agencée pour que les rayons qui la frappent soient réfléchis en sens inverse de l'émission.

Dans ce dernier cas, la plupart des rayons lumineux issus de l'extrémité de la fibre optique et frappant la paroi interne du manchon sont réfléchis du côté de l'extrémité de la fibre optique et ils ne peuvent ainsi sortir du manchon. Une certaine quantité de rayons peut d'ailleurs, après la première réflexion sur la surface interne du manchon, se réfléchir de nouveau à l'extérieur du manchon dans la mesure où la quantité de tels rayons lumineux est négligeable.

Afin que la surface interne du manchon réfléchisse les rayons en sens inverse de l'émission, cette surface peut présenter en coupe axiale un profil en dents de scie.

Dans ce cas également il est préférable de rendre cette surface la plus absorbante possible par exemple à l'aide d'un revêtement noir mat.

Ce profil peut par exemple être formé par des gorges annulaires ou par un filetage intérieur du manchon.

Avantageusement les faces du profil orientées vers l'extrémité de la fibre optique font avec le plan perpendiculaire à l'axe du manchon un angle sensiblement égal au semi-angle au sommet du cône d'éclairement en sortie de fibre.

Ainsi la surface interne du manchon renvoie les rayons lumineux qui la frappent du côté de l'extrémité de la fibre optique.

Dans le cas où le profil est formé par un filetage intérieur du manchon, on prévoit de préférence que le support comporte un filetage extérieur coopérant avec le filetage intérieur du manchon.

Cet agencement permet, tout en assurant que la surface interne du manchon soit sensiblement rétro-réfléchissante, de réaliser simplement les moyens permettant de déplacer axialement l'extrémité de la fibre optique à l'intérieur du manchon et par conséquent de régler la puissance lumineuse émise.

D'autres caractéristiques et avantages de l'invention apparaîtront dans la description qui suit de deux de ces formes de réalisation données à titre d'exemple non limitatif.

Au dessin schématique annexé :

la figure 1 représente en coupe axiale une première forme de réalisation de l'invention,

la figure 2 représente également en coupe axiale une seconde forme de réalisation de l'invention et

la figure 3 représente un ensemble utilisant une pluralité de dispositifs selon l'invention.

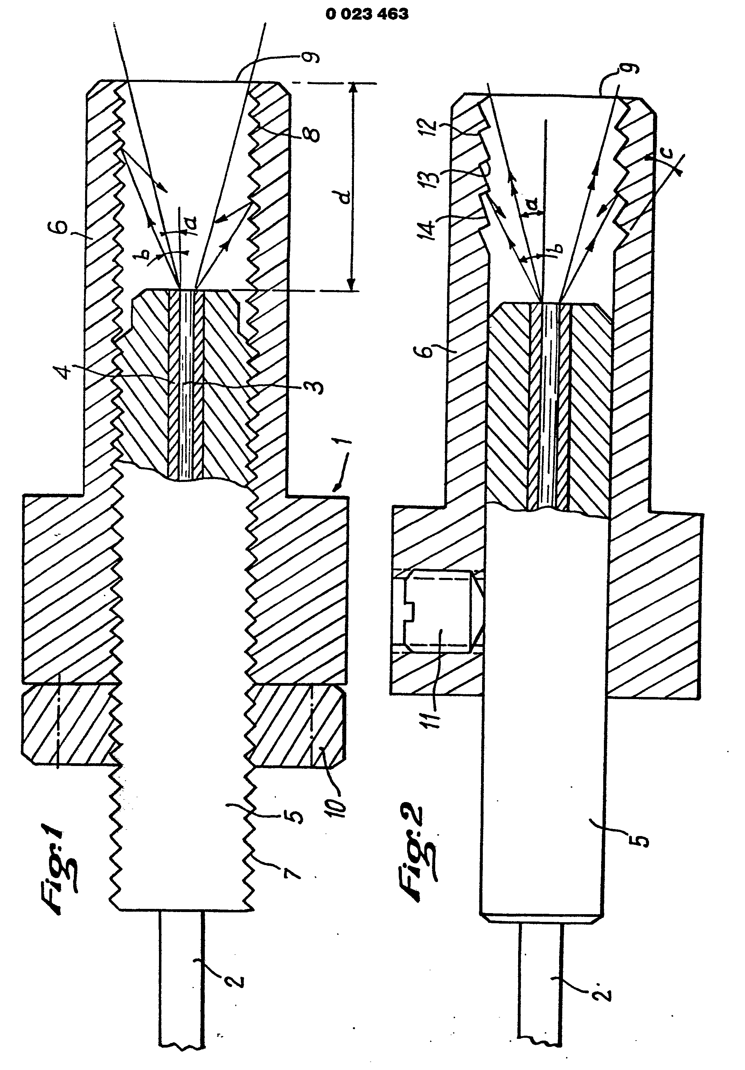

La figure 1 représente un dispositif 1 disposé à l'extrémité d'une fibre optique 2. Dans l'exemple représenté la fibre optique 2 est du type comportant un cœur 3 susceptible de transmettre les rayons lumineux, entourée par une gaine optique 4 présentant un indice de réfraction différent de celui du cœur 3. De telles fibres optiques sont déjà bien connues, dans lesquelles le cœur 3 est par exemple réalisé en silice tandis que la gaine optique 4 est en silicone.

Le dispositif 1 comporte essentiellement un support 5 pour la fibre optique et un manchon 6.

La fibre optique est fixée par tout moyen connu dans le support 5 par exemple par sertissage. Le support 5 présente par ailleurs un filetage 7 qui, dans l'exemple représenté, est un filetage conventionnel.

Le manchon 6 présente également à sa face interne un filetage 8 complémentaire du filetage 7 du support 5.

Il est ainsi possible par rotation du support 5 par rapport au manchon 6 de déplacer axialement l'extrémité de la fibre optique 2 par rapport à l'extrémité libre 9 du manchon 6.

Enfin un contre écrou 10 présentant également un filetage interne complémentaire du filetage 7 du support 5 permet de bloquer axialement le support 5 par rapport au manchon 6 en empêchant leur rotation relative.

En variante, on peut prévoir d'utiliser un ressort disposé autour du support 5 entre le manchon 6 et un épaulement du support 5. Ce ressort permet à la fois de rattraper le jeu du filetage et de freiner la rotation relative du support et du manchon.

On constate sur la figure qu'en réglant la distance d entre l'extrémité de la fibre optique 2 et l'extrémité 9 du manchon, il est possible de régler le demi-angle au sommet a du faisceau issu du dispositif. Tous les rayons émis de l'extrémité de la fibre optique 2 avec des angles b supérieurs à a sont réfléchis vers l'intérieur du manchon.

A titre d'exemple on a réalisé un dispositif tel que celui-ci avec une fibre dont le cœur avait un diamètre de 200 μ. Le manchon 6 avait un diamètre intérieur de 4 mm et les filetages 7 et 8 avaient un pas de 0,5 mm.

On a constaté que pour une distance d comprise entre 0 et environ 3 mm, la puissance émise à la sortie du dispositif était égale à la puissance émise à la sortie de la fibre optique 2. Ceci s'explique par le fait que pour ces distances d l'angle a était supérieur au demi-angle au sommet du cône d'éclairement en sortie de fibre.

Pour des distances supérieures à 3 mm la puissance émise à la sortie du dispositif décroissait régulièrement. Par exemple pour une distance d égale à 8 mm, la puissance émise à la sortie du dispositif ne représentait que 60 % de la puissance émise à la sortie de la fibre. Le dispositif fonctionne donc comme un atténuateur présentant une pente moyenne de 1 % pour 0,1 mm.

On constate par conséquent que ce dispositif permet d'obtenir une grande plage de réglage puisqu'elle peut atteindre 50 % et que la précision du réglage est également excellente. La résolution est en effet inférieure à 1 % puisque cette valeur correspond à un cinquième de tour du support 5 par rapport au manchon 6.

Dans la forme de réalisation représentée à la figure 2 la fibre optique 2 est également montée dans un support 5 susceptible de se déplacer axialement par rapport à un manchon 6. Le blocage axial du support 5 par rapport au manchon 6 est ici réalisé à l'aide d'une vis 11.

Dans cette forme de réalisation la face interne du manchon 6 comporte des gorges annulaires 12 donnant comme précédemment un profil en dents de scie.

Les faces 13 du profil orientées vers l'extrémité de la fibre optique sont sensiblement perpendiculaires aux faces 14 orientées vers l'extrémité 9 du support 6.

Ces faces 14 font elles-mêmes avec l'axe du dispositif, un angle c qui est sensiblement égal au demi-angle au sommet du cône d'éclairement en sortie de fibre.

Comme dans la forme de réalisation représentée à la figure 1, seuls les rayons lumineux issus de la fibre 2 dans un angle inférieur à l'angle a sortent du dispositif. Les rayons émis dans un angle b supérieur à l'angle a frappent l'une des faces 13 des gorges annulaires 12 et sont par conséquent sensiblement réfléchis vers l'extrémité de la fibre optique 2.

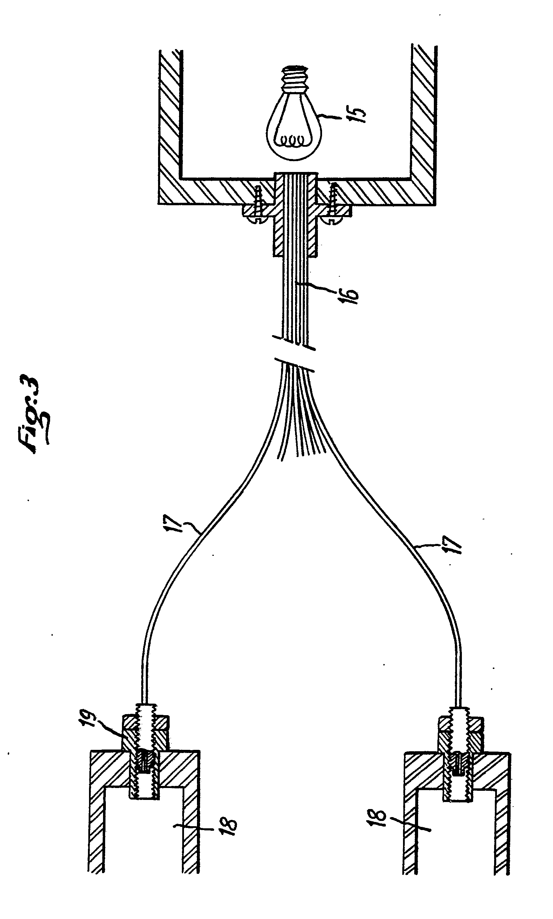

Le dispositif représenté à la figure 3 comporte une source lumineuse 15 qui éclaire l'extrémité d'un faisceau 16 de fibres optiques. Chacune des fibres optiques 17 du faisceau 16 est prévue pour éclairer une chambre individuelle 18, par exemple une chambre de scintillateur. Dans un certain nombre de dispositifs de ce type, il est indispensable que chacune des chambres 18 reçoive une même puissance lumineuse.

A cet effet on a disposé aux extrémités émettrices des fibres optiques 17 un dispositif atténuateur 19 selon l'invention qui peut être par exemple d'un des types représentés aux figures 1 ou 2, un dispositif du type de celui de la figure 1 étant représenté sur la figure 3.

Il est par conséquent possible à l'aide de ce dispositif 19 de régler la puissance lumineuse émise à l'extrémité de chacune des fibres optiques 17 à une valeur prédéterminée inférieure ou égale à la puissance lumineuse émise à l'extrémité de la fibre optique présentant le rendement minimum.

L'invention fournit donc un atténuateur réglable de faible encombrement et peu onéreux à fabriquer, qui présente une large plage de réglage, une bonne résolution et une grande facilité de réglage.

**Revendications**

1. Dispositif pour régler le niveau de la puissance lumineuse émise à l'extrémité d'une fibre optique, caractérisé par le fait qu'il comporte un manchon (6) ouvert à ses deux extrémités, un support (5) susceptible de se déplacer axialement à l'intérieur du manchon et permettant de positionner l'extrémité de la fibre optique (2) à l'intérieur du manchon à une distance donnée d'une des extrémités (9) du manchon, des moyens (10, 11) pour bloquer ledit déplacement, et des moyens (8, 12, 13, 14) pour empêcher les rayons lumineux issus de l'extrémité de la fibre optique et frappant la paroi interne du manchon, de se réfléchir à l'extérieur du manchon.

2. Dispositif selon la revendication 1, caractérisé par le fait que la surface interne du manchon est agencée pour que les rayons qui la frappent soient réfléchis en sens inverse de l'émission.

3. Dispositif selon l'une quelconque des revendications 1 et 2, caractérisé par le fait que la surface interne du manchon est absorbante.

4. Dispositif selon la revendication 3, caractérisé par le fait que la surface interne du manchon présente, en coupe axiale, un profil en dents de scie.

5. Dispositif selon la revendication 4, caractérisé par le fait que les faces (13) du profil orientées vers l'extrémité de la fibre optique font avec le plan perpendiculaire à l'axe du manchon, un angle (c) sensiblement égal au demi-angle au sommet du cône d'éclairement en sortie de fibre.

6. Dispositif selon l'une quelconque des revendications 4 et 5, caractérisé par le fait que ledit profil est formé par des gorges annulaires (12).

7. Dispositif selon l'une quelconque des revendications 4 à 6 caractérisé par le fait que ledit profil est formé par un filetage intérieur (8) du manchon.

8. Dispositif selon l'ensemble des revendications 1 et 7, caractérisé par le fait que le support comporte un filetage extérieur (7) coopérant avec le filetage intérieur (8) du manchon.

## Claims

1. A device for regulating the level of the luminous power emitted at the end of an optical fibre, characterized by the fact that it includes a sleeve (6) open at both ends, a support (5) capable of being displaced axially inside the sleeve and enabling the end of the optical fibre (2) to be positioned inside the sleeve at a given distance from one of the ends (9) of the sleeve, means (10, 11) of locking the said displacement and means (8, 12, 13, 14) of preventing the light rays which leave the end of the optical fibre and strike the inner wall of the sleeve, from being reflected towards the outside of the sleeve.

2. A device as in Claim 1, characterized by the fact that the inner surface of the sleeve is arranged so that the rays which strike it are reflected in the direction opposite to the emission.

3. A device as in either of the Claims 1 and 2, characterized by the fact that the inner surface of the sleeve is absorbent.

4. A device as in Claim 3, characterized by the fact that the inner surface of the sleeve exhibits in axial section a sawtooth profile.

5. A device as in Claim 4, characterized by the fact that the faces (13) of the profile, directed towards the end of the optical fibre, make with the plane perpendicular to the axis of the sleeve an angle (c) substantially equal to the half-angle at the apex of the cone of illumination leaving the fibre.

6. A device as in either of the Claims 4 and 5, characterized by the fact that the said profile is formed by annular grooves (12).

7. A device as in any one of the Claims 4 to 6, characterized by the fact that the said profile is formed by a screw-thread (8) inside the sleeve.

8. A device as in the whole of Claims 1 and 7, characterized by the fact that the support includes an outer thread (7) which cooperates with the thread (8) inside the sleeve.

## Ansprüche

1. Vorrichtung zur Regelung des von dem Ende einer optichen Faser ausgestrahlten Lichtstärke-Pegels, dadurch gekennzeichnet, daß sie eine an beiden Enden offene Muffe (6) aufweist, daß ein Träger (5) vorgesehen ist, der axial im Innern der Muffe verstellbar ist und der es ermöglicht, das Ende der optischen Faser (2) im Muffeninnern auf eine vorgegebene Entfernung von einem der Enden (9) der Muffe einzustellen, daß Sperrorgane (10, 11) für die Einstellung und Mittel (8, 12, 13, 14) vorgesehen sind, um zu verhindern, daß vom Ende der optischen Faser ausgehende Lichtstrahlung, welche gegen die Innenwand der Muffe trifft, durch Reflexion aus der Muffe austritt.

2. Vorrichtung nach Anspruch 1, dadurch gekennzeichnet, daß die Innenoberfläche der Muffe so ausgestaltet ist, daß die sie treffenden Strahlen umgekehrt zur Emissionsrichtung reflektiert werden.

3. Vorrichtung nach Anspruch 1 oder 2, dadurch gekennzeichnet, daß die Innenfläche der Muffe (6) absorbierende Eigenschaften hat.

4. Vorrichtung nach Anspruch 3, dadurch gekennzeichnet, daß die Innenfläche der Muffe im Querschnitt ein sägezahnförmiges Profil aufweist.

5. Vorrichtung nach Anspruch 4, dadurch gekennzeichnet, daß die Flächen (13) des Profils, die in Richtung auf das Ende der optischen Faser hin orientiert sind, mit der Ebene senkrecht zur Muffenachse einen Winkel (c) bilden, der im wesentlichen gleich dem halben Öffnungswinkel des Lichtkegels am Faserende ist.

6. Vorrichtung nach Anspruch 4 oder 5, dadurch gekennzeichnet, daß das Profil aus ringförmigen Ausnehmungen besteht.

7. Vorrichtung nach einem der Ansprüche 4 bis 6, dadurch gekennzeichnet, daß das Profil durch ein Innengewinde der Muffe gebildet wird.

8. Vorrichtung nach den Ansprüchen 1 und 7, dadurch gekennzeichnet, daß der verstellbare Träger ein Außengewinde (7) aufweist, welches mit dem Innengewinde (8) der Muffe zusammenwirkt.

Fig.1

Fig.2

Fig.3

15

16

17

17

19

18

18